Europäisches Patentamt

European Patent Office

Office européen des brevets

(19)

(11) Numéro de publication : **0 102 871**
**B1**

(12) # FASCICULE DE BREVET EUROPÉEN

(45) Date de publication du fascicule du brevet :
28.05.86

(21) Numéro de dépôt : **83401547.1**

(22) Date de dépôt : **27.07.83**

(51) Int. Cl.⁴ : **A 47 J 27/08, F 16 J 13/04**

(54) Dispositif de serrage d'un couvercle sur un récipient de cuisson sous pression.

(30) Priorité : **20.08.82 FR 8214377**

(43) Date de publication de la demande :
**14.03.84 Bulletin 84/11**

(45) Mention de la délivrance du brevet :
**28.05.86 Bulletin 86/22**

(84) Etats contractants désignés :
**AT BE GB IT**

(56) Documents cités :
**FR-A- 631 548**
**FR-A- 2 407 382**
**GB-A- 587 628**
**US-A- 1 454 835**
**US-A- 2 548 691**

(73) Titulaire : **SEB S.A.**
**F-21260 Selongey (FR)**

(72) Inventeur : **Sebillotte, Christian**
**6, rue des Moutons**
**F-21260 Selongey (FR)**

(74) Mandataire : **Bouju, André**
**Cabinet Bouju 38 avenue de la Grande Armée**
**F-75017 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

La présente invention concerne un dispositif de serrage d'un couvercle sur un récipient de cuisson sous pression, tel qu'un autocuiseur.

Ce dispositif comprend un étrier placé en regard de la face externe du couvercle et destiné à être calé dans une direction opposée au récipient par des crochets de retenue fixés au bord de ce récipient. Ce couvercle de plus, est relié à l'étrier par une vis axiale vissée dans un manchon qui est rendu solidaire d'un organe de commande manuelle dont la rotation dans le sens de la fermeture du couvercle a pour effet de dévisser le manchon par rapport à la vis, d'écarter de l'étrier le couvercle et de serrer celui-ci sur le bord du récipient.

L'étrier calé contre les crochets de retenue fixés au bord du récipient supporte ainsi la pression engendrée à l'intérieur de l'auto-cuiseur qui s'applique contre le couvercle.

Lors de la fermeture du couvercle, l'utilisateur doit faire tourner l'organe de commande manuelle suivant un certain nombre de tours pour obtenir un serrage satisfaisant du couvercle contre l'étrier et contre le récipient.

Il a cependant été constaté que de nombreux utilisateurs ne suivaient pas les recommandations d'emploi, et serraient l'organe ou volant de commande manuelle au-delà du nombre de tours prescrit en pensant ainsi obtenir une meilleure étanchéité entre le couvercle et le récipient et augmenter la sécurité de la fermeture du couvercle.

Or, en agissant ainsi, on risque d'appliquer à l'étrier, aux filets de la vis et de le manchon ainsi qu'au couvercle et aux crochets de retenue des contraintes mécaniques dépassant les limites admissibles et pouvant ainsi engendrer des déformations permanentes telles que la sécurité de la fermeture de l'auto-cuiseur n'est plus assurée.

Pour remédier à cet inconvénient, le FR-A-2 407 382 décrit un dispositif de serrage, du genre précité, dans lequel la vis et le manchon comportent des butées qui limitent la course de dévissage dans le sens de la fermeture afin de limiter la force de serrage du couvercle contre l'étrier et le bord du récipient à une valeur prédéterminée.

Dans ce dispositif, la butée du manchon est constituée par une saillie annulaire ménagée à l'intérieur du manchon, tandis que la butée de la vis est un épaulement ménagé sur une partie élargie fixée au couvercle. Par ailleurs, cette vis qui est fixe, est elle-même vissée à l'intérieur d'une autre vis solidaire de l'organe de commande manuelle, qui est vissée dans le manchon. Ce dernier est monté coulissant dans une pièce de guidage solidaire du couvercle. De plus, le manchon prend appui sur un organe élastique, avant que les deux butées précitées prennent appui l'une sur l'autre.

L'inconvénient de ce dispositif réside dans sa très grande complexité puisqu'il comporte un grand nombre de pièces mobiles difficiles à réaliser et susceptibles de s'user.

Le but de la présente invention est de remédier à cet inconvénient en créant un dispositif beaucoup plus simple et fiable que celui de la réalisation connue précitée.

Suivant l'invention, ce dispositif est caractérisé en ce que les butées sont constituées par une partie élargie de l'extrémité de la vis et un épaulement annulaire ménagé à l'extrémité du filetage interne du manchon opposée au couvercle.

Lorsque l'utilisateur tourne l'organe de commande manuelle de serrage au-delà des conditions optimales prescrites, les butées précitées prennent appui l'une contre l'autre, après un certain nombre de tours de rotation de cet organe. Lorsque ces butées sont en contact le couvercle est écarté de l'étrier et serré contre le récipient, dans les conditions maximales limites en ce qui concerne les contraintes appliquées sur les matériaux en présence.

L'utilisateur ne risque ainsi pas de serrer le couvercle trop fort et d'appliquer aux filets de la vis et du manchon ainsi qu'au couvercle, à l'étrier et aux crochets de retenue des contraintes nuisibles pour la tenue mécanique de ces composants.

Par rapport à la réalisation décrite dans le FR-A-2 407 382, le dispositif conforme à l'invention est beaucoup plus simple à réaliser, et donc plus fiable.

D'autres particularités et avantages de l'invention apparaîtront encore dans la description ci-après.

Aux dessins annexés, donnés à titre d'exemples non limitatifs :

la figure 1 est une vue en élévation et en coupe longitudinale partielle du manchon fileté et de la vis du dispositif de serrage conforme à l'invention ;

la figure 2 est une vue en coupe longitudinale partielle de l'ensemble du dispositif de serrage conforme à l'invention, monté sur un autocuiseur, ce dispositif étant en position complètement desserrée ;

la figure 3 est une vue analogue à celle de la figure 2, le dispositif étant en position de serrage optimal ;

la figure 4 est une vue analogue aux figures 2 et 3, le dispositif étant en position de serrage maximal limite.

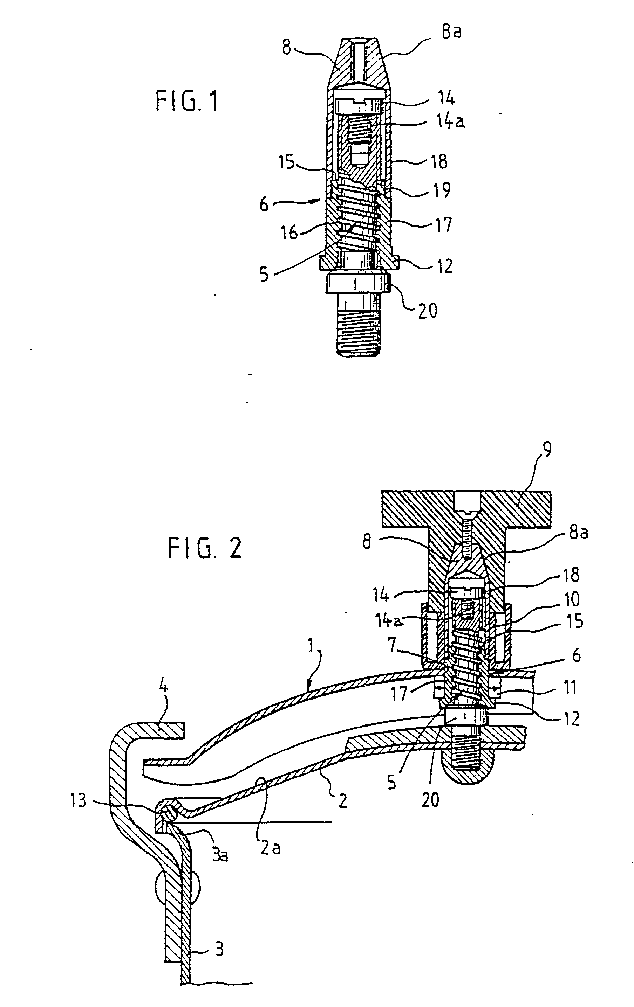

Dans la réalisation des figures 2 à 4, le dispositif de serrage conforme à l'invention comprend un étrier 1 de forme arquée, placé en regard de la face externe 2a du couvercle 2 du récipient 3 d'un autocuiseur et destiné à être calé, en position de fermeture du couvercle 2, dans une direction opposée au récipient 3 par deux crochets de retenue 4 fixés près du bord 3a du récipient 3.

Le couvercle 2 est relié à l'étrier 1 par une vis 5 fixée axialement au couvercle 2 et vissée dans un manchon 6 monté en rotation dans une ouverture axiale 7 de l'étrier 1.

L'extrémité 8 du manchon 6 opposée au couvercle 2 porte un volant manuel de serrage 9 en matière plastique moulée autour de cette extrémité 8. Cette dernière présente une surface tronconique avec deux méplats 8a assurant la solidarisation en rotation du volant 9 et du manchon 6.

Le manchon 6 est calé axialement de chaque côté de l'étrier 1 d'une part, par une bague 10 insérée entre le volant 9 et l'étrier 1 et d'autre part, par une butée 11 placée entre l'étrier 1 et une collerette 12 du manchon 6.

On voit sur les figures 2 à 4, que la rotation du volant 9 dans le sens de la fermeture a pour effet de dévisser le manchon 6 par rapport à la vis 5 et de serrer le couvercle 2 contre le récipient 3 en écrasant le joint 13 recouvrant le bord 3a du récipient 3.

Conformément à l'invention, la vis 5 et le manchon fileté 6 comportent des butées 14, 15 (voir également la figure 1) qui limitent la course de dévissage du manchon 6 par rapport à la vis 5 afin de limiter la force de serrage du couvercle 2 contre l'étrier 1 et le bord 3a du récipient 3 à une valeur prédéterminée.

La butée 14 est constituée par la tête d'une vis 14a vissée axialement dans l'extrémité de la vis 5.

La tête 14 de cette vis présente un diamètre supérieur à celui de la vis de serrage 5, de sorte que cette tête 14 peut prendre appui sur la butée 15 constituée par un épaulement annulaire ménagé à l'intérieur du manchon 6. Comme on le voit notamment sur la figure 1, cet épaulement 15 est ménagé à l'extrémité du filetage interne 16 du manchon 6, opposée au couvercle 2.

Sur cette figure 1, on voit en outre que pour permettre le montage de la vis 14a, le manchon 6 est réalisé en deux parties 17, 18 assemblées axialement l'une sur l'autre, par vissage au moyen des filetages 19.

Ces filetages 19 sont assemblés d'une façon indesserrable, par un blocage énergique et/ou par un collage.

L'extrémité de la partie 17 du manchon 6 opposée à la collerette 12 constitue l'épaulement annulaire formant la butée 15.

On va maintenant expliquer le fonctionnement du dispositif de serrage que l'on vient de décrire.

Sur la figure 2, le couvercle 2 repose par le joint 13 recouvrant le bord 3a du récipient 3, le volant de commande 9 étant en position d'ouverture et le manchon 6 étant complètement serré sur la vis 5. La collerette 12 de ce manchon 6 est en appui contre un épaulement 20 de la vis 5 adjacent au couvercle 2.

En faisant tourner le volant 9 dans le sens de la fermeture, on dévisse le manchon fileté 6 par rapport à la vis 5, ce qui a pour effet d'écarter l'étrier 1 du couvercle 2. Dès que l'étrier 1 et les crochets de retenue 4 sont en contact, on procède alors au serrage optimal en faisant effectuer au volant 9 un certain nombre de tours, deux par exemple.

On voit, qu'après serrage optimal, il subsiste entre la tête élargie 14 de la vis et l'épaulement interne 15 du manchon 6 une course d. Cette course d, variable d'un appareil à l'autre, permet de compenser les dispersions des cotes inhérentes à une fabrication en grande série.

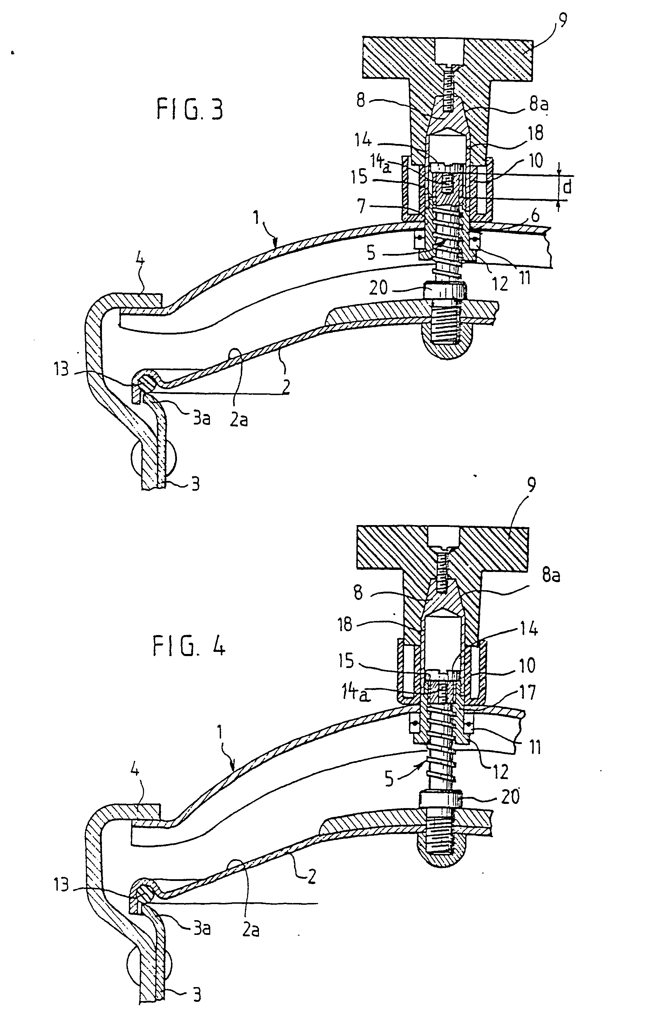

Si l'on poursuit malencontreusement la rotation du volant 9 dans le sens de la fermeture, le manchon 6 est dévissé davantage et le couvercle 2, le joint 13, les crochets de retenue 4, mais principalement l'étrier 1 subissent des déformations importantes. Celles-ci sont représentées symboliquement et globalement, sur la figure 4, par la courbure accentuée du seul étrier 1.

Lorsque la tête 14 de la vis prend appui sur l'épaulement interne 15 du manchon fileté 6, ce dernier est bloqué et l'utilisateur ne peut plus tourner le volant 9. On comprend que dans cette position, l'utilisateur ne peut plus accentuer les déformations des pièces 1, 2, 4 et 13, de sorte que celles-ci ne risquent pas de subir des déformations irréversibles dues à des contraintes mécaniques dépassant leurs limites élastiques.

Par ailleurs, il subsiste entre la vis 5 et le manchon 6 un nombre suffisant de filets en prise, de sorte que ceux-ci ne risquent pas d'être arrachés sous l'effet de la force de serrage réalisée entre l'étrier 1 et le couvercle 2.

La sécurité de serrage du couvercle sur l'autocuiseur est ainsi assurée avec une économie de moyens remarquable.

Bien entendu, l'invention n'est pas limitée à l'exemple que l'on vient de décrire et on peut apporter à celui-ci de nombreuses modifications, sans sortir du cadre de l'invention.

Ainsi, l'assemblage des deux parties 17 et 18 du manchon 6 pourrait être réalisé autrement que par vissage, par exemple par soudure ou brasure.

De même, la butée 14 de la vis 5 pourrait être réalisée par déformation de l'extrémité de cette vis ou par une pièce rapportée autre qu'une vis.

Par ailleurs, il pourrait être prévu d'intercaler entre la tête 14 de la vis et l'extrémité de la vis de serrage 5 une rondelle d'épaisseur variable permettant de régler la course d de serrage à la valeur optimale, compte tenu des tolérances de fabrication, notamment de l'étrier.

**Revendications**

1. Dispositif de serrage d'un couvercle (2) sur un récipient de cuisson sous pression (3), comprenant un étrier (1) placé en regard de la face externe (2a) du couvercle et destiné à être calé dans une direction opposée au récipient par des crochets de retenue (4) fixés au bord (3a) de ce dernier, ce couvercle (2) étant relié à l'étrier (1) par une vis fixée axialement au couvercle et vissée dans un manchon (6) rendu solidaire d'un organe de commande manuelle (9) dont la rotation dans le sens de la fermeture du couvercle a pour effet de dévisser le manchon par rapport à la vis, d'écarter de l'étrier le couvercle et de serrer celui-ci sur le bord du récipient, cette vis (5) et ce manchon (6) comportant des butées (14, 15) qui limitent la course de dévissage dans le sens de la fermeture afin de limiter la force de serrage du couvercle (2) contre l'étrier (1) et le bord (3a) du récipient (3) à une valeur prédéterminée, caractérisé en ce que lesdites butées sont constituées par une partie élargie (14) de l'extrémité de la vis (5) et un épaulement annulaire (15) ménagé à l'extrémité du filetage interne (16) du manchon (6) opposée au couvercle (2).

2. Dispositif conforme à la revendication 1, caractérisé en ce que ladite partie élargie (14) est constituée par la tête d'une vis (14a) vissée axialement sur ladite extrémité de la vis (5), cette tête présentant un diamètre supérieur à celui de la vis (5).

3. Dispositif conforme à l'une quelconque des revendications 1 ou 2, caractérisé en ce que le manchon (6) comprend deux parties (17, 18) assemblées axialement l'une sur l'autre, l'extrémité (15) de l'une (17) de ces parties constituant ledit épaulement annulaire.

4. Dispositif conforme à la revendication 3, caractérisé en ce que lesdites parties (17, 18) du manchon (6) sont vissées l'une sur l'autre d'une façon indesserrable.

## Claims

1. A device for locking a lid (2) on a pressure cooker vessel (3), comprising a yoke (1) disposed facing the outer surface (2a) of the lid and adapted to be secured in the opposite direction to the vessel by retaining hooks (4) secured to the edge (3a) of the vessel, the lid (2) being connected to the yoke (1) by a screw fixed axially to the lid and screwed into a sleeve (6) connected to a manual control means (9), rotation of which in the direction of lid closure results in the sleeve being unscrewed in relation to the screw, the cover being moved away from the yoke and locked on the edge of the vessel, said screw (5) and said sleeve (6) comprising stops (14, ·15) which limit the unscrewing movement in the closure direction in order to limit the force by which the lid (2) is locked against the yoke (1) and the edge (3a) of the vessel (3) to a predetermined value, characterised in that the said stops comprise a widened part (14) of the end of the screw (5) and an annular shoulder (15) formed at the end of the internal screwthreading (16) of the sleeve (6) remote from the lid (2).

2. A device according to claim 1, characterised in that the said widened part (14) comprises the head of a screw (14a) screwed axially on said end of the screw (5), said head having a larger diameter than that of the screw ·(5).

3. A device according to claim 1 or 2, characterised in that the sleeve (6) comprises two parts (17, 18) axially assembled on one another, the end (15) of one (17) of said parts forming the said annular shoulder.

4. A device according to claim 3, characterised in that the said parts (17, 18) of the sleeve (6) are screwed on one another self-lockingly.

## Patentansprüche

1. Einrichtung zum Festklemmen eines Deckels (2) auf einem Druckkochbehälter (3), mit einem neben der Außenfläche (2a) des Deckels angeordneten Bügel (1), der dazu bestimmt ist, in einer dem Behälter entgegengesetzten Richtung durch an dem Rand (3a) des letzteren befestigte Rückhaltehaken (4) abgestützt zu werden, wobei der Deckel (2) mit dem Bügel (1) durch eine axial an dem Deckel fixierte Schraube verbunden ist, die in eine mit einem handbetätigten Steuerorgan (9) kraftschlüssig verbundene Hülse (6) eingeschraubt ist, wobei eine Drehung des Steuerorgans im Sinne des Schliessens des Deckels bewirkt, daß die Hülse in bezug auf die Schraube losgeschraubt, der Deckel vom Bügel entfernt und auf dem Rand des Behälters festgeklemmt wird, wobei die Schraube (5) und die Hülse (6) Anschläge (14, 15) besitzen, die den Hub des Losschraubens im Sinne des Schließens begrenzen, um die Klemmkraft des Deckels (2) gegen den Bügel (1) und den Rand (3a) des Behälters (3) auf einen vorbestimmten Wert zu limitieren, dadurch gekennzeichnet, daß die genannten Anschläge durch einen verbreiterten Teil (14) des Endes der Schraube (5) und eine an dem dem Deckel (2) entgegengesetzten Ende des Innengewindes (16) der Hülse (6) vorgesehene Ringschulter (15) gebildet sind.

2. Einrichtung nach Anspruch 1, dadurch gekennzeichnet, daß der genannte verbreiterte Teil (14) von dem Kopf einer axial in das genannte Ende der Schraube (5) eingeschraubten Schraube (14a) gebildet ist, wobei dieser Kopf einen größeren Durchmesser aufweist als die Schraube (5).

3. Einrichtung nach Anspruch 1 oder 2, dadurch gekennzeichnet, daß die Hülse (6) zwei axial aneinandergefügte Abschnitte (17, 18) umfaßt, wobei das Ende (15) des einen (17) dieser Abschnitte die ringförmige Schulter bildet.

4. Einrichtung nach Anspruch 3, dadurch gekennzeichnet, daß die genannten Abschnitte (17, 18) der Hülse (6) auf selbstsichernde Art aneinandergeschraubt sind.

FIG. 1

FIG. 2

FIG. 3

FIG. 4